# EUROPÄISCHE PATENTANMELDUNG

(11) **EP 3 916 633 A1**
(43) Veröffentlichungstag der Anmeldung: **01.12.2021**
(21) Anmeldenummer: 20176228.3
(22) Anmeldetag: 25.05.2020
(51) Int. Cl.: G06K 9/20, G06K 9/46, G06K 9/62, G06N 3/04

(54) **KAMERA UND VERFAHREN ZUM VERARBEITEN VON BILDDATEN**

(71) Anmelder: SICK AG, 79183 Waldkirch (DE)
(72) Erfinder: Stawiaski, Jean, 79199 Kirchzarten (DE); Falk, Thorsten, 79292 Pfaffenweiler (DE); Maier, Johannes, 79104 Freiburg (DE)

(57) **Zusammenfassung**

Es wird eine Kamera (10) angegeben, insbesondere ein kamerabasierter Codeleser, die einen Bildsensor (24) zum Erfassen von Bilddaten mit einer Vielzahl von Bildpunkten, eine erste Verarbeitungseinheit (30) zum Einlesen der Bilddaten des Bildsensors (24) in einem Bilddatenstrom aus Gruppen benachbarter Bildpunkte, eine zweite Verarbeitungseinheit (32) zum Verarbeiten von Bilddaten und einen Speicher (34) zum Ablegen von Bilddaten und Verarbeitungsergebnissen aus Bilddaten aufweist, wobei ein neuronales Netz (38) auf der ersten Verarbeitungseinheit (30) und/oder der zweiten Verarbeitungseinheit (32) implementiert ist. Dabei ist die erste Verarbeitungseinheit (30) dafür ausgebildet, eingelesene Gruppen von Bildpunkten bereits mit mindestens einer ersten Schicht (42) des neuronalen Netzes zu verarbeiten, noch während weitere Gruppen von Bilddaten von dem Bildsensor (24) eingelesen werden.

## Beschreibung

Die Erfindung betrifft eine Kamera und ein Verfahren zum Verarbeiten von Bilddaten mit einem neuronalen Netz nach dem Oberbegriff von Anspruch 1 beziehungsweise 15.

Kameras werden unter anderem in industriellen Anwendungen in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage eines Codelesers oder einer Kamera für Inspektions- oder Vermessungsaufgaben über einem Förderband. Die Kamera nimmt während der Relativbewegung des Objektstroms auf dem Förderband Bilder auf und speichert die erfassten Informationen beziehungsweise leitet in Abhängigkeit der gewonnenen Objekteigenschaften weitere Bearbeitungsschritte ein. Solche Bearbeitungsschritte können in der an das konkrete Objekt angepassten Weiterverarbeitung an einer Maschine bestehen, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Von einem Codeleser werden die Objekte für eine korrekte Sortierung oder ähnliche Bearbeitungsschritte anhand der angebrachten Codes identifiziert.

Dank der Fortentwicklung in der Kamera- und Bildsensortechnologie werden die zu verarbeitenden Bilder immer größer. Die ungeheuren Datenmengen stellen die begrenzten Rechenkapazitäten und Bandbreiten zur Weitergabe und Verarbeitung in einer Kamera vor Herausforderungen. Ein erster kritischer Schritt ist das Auffinden und Lokalisieren von Codebereichen, denn dies muss noch auf den gesamten hochaufgelösten Bilddaten erfolgen. Für diese Segmentierung, aber auch weitere Vorverarbeitungen zum Aufbereiten von Bilddaten, werden im Stand der Technik FPGAs (Field Programmable Gate Array) eingesetzt.

Die EP 2 555 160 B1 findet in einer Vorverarbeitung auf einem FPGA interessierende Bereiche oder Codekandidaten anhand eines Kontrastmaßes. In der EP 2 003 599 A1 wird schon während des Auslesens der Bilddaten ein Binärbild und in der EP 1 365 577 A1 ein komprimiertes Bild beispielsweise im JPEG-Format erzeugt. Die EP 3 009 984 A1 stellt ein Detektionssystem für optische Codes vor, das einen Verschiebungsvektor für aufeinanderfolgende Bildaufnahmen bestimmt, der angibt, wie ein Bildbereich relativ zum Vorgängerbild verschoben ist. Der Verschiebungsvektor kann durch Korrelation von Grauwertprofilen bestimmt werden, die in einer Segmentierung aufgefunden werden, und das Verfahren zur Bestimmung des Verschiebungsvektors kann auf einem FPGA implementiert sein.

Soweit sich diese Ansätze mit der Segmentierung befassen, so beruht dies auf vordefinierten Kriterien wie einem Kontrastmaß. Das ist jedoch fehleranfällig, da beispielsweise Texte oder periodische Muster mit Codes verwechselt oder Codes in kontrastarmen Bereichen übersehen werden und dergleichen. Gerade bei unübersichtlichem Hintergrund kann es geschehen, dass deswegen der Decodierungsprozess im verfügbaren Zeitfenster zu keinem Ergebnis kommt und abgebrochen werden muss, um das nächste Bild zu verarbeiten. Das Resultat sind Lesefehler beziehungsweise nicht gelesene Codes, die zu aufwändigen manuellen Nachbearbeitungsschritten zwingen.

Grundsätzlich sind neuronale Netze und speziell CNNs (Convolutional Neural Networks), die auf die Erkennung von Codes trainiert sind, sehr gut geeignet, diese Nachteile zu überwinden. Hierzu finden sich in der Literatur in den letzten Jahren zunehmend Ansätze.

In der Arbeit Zhao, Qijie, et al, "Deep Dual Pyramid Network for Barcode Segmentation using Barcode-30k Database", arXiv preprint arXiv: 1807.11886 (2018) wird ein großer Datensatz synthetisiert und damit eine Codesegmentierung durch CNNs durchgeführt. Die genaue Netzwerkarchitektur und Hardwareimplementierung wird aber nicht vorgestellt.

Xiao, Yunzhe, and Zhong Ming, "1D Barcode Detection via Integrated Deep-Learning and Geometric Approach", Applied Sciences 9.16 (2019): 3268 reklamieren eine um mindestens 5 % gegenüber bisherigen Ansätzen verbesserte Performance beim Lokalisieren von Barcodes, ohne dass Parameter von Hand eingestellt werden müssten.

Hansen, Daniel Kold, et al, "Real-Time Barcode Detection and Classification using Deep Learning", IJCCI. 2017 erkennen Codebereiche einschließlich einer Verdrehung in Echtzeit mit einem Intel i5-6600 3.30 GHz und einer Nvidia GeForce GTX 1080.

Zharkov, Andrey; Zagaynov, Ivan, Universal Barcode Detector via Semantic Segmentation, arXiv preprint arXiv:1906.06281, 2019 erkennen Barcodes und identifizieren den Codetyp in einer CPU-Umgebung.

Die Verarbeitung eines CNNs bedarf jedoch nochmals ganz anderer Rechenkapazitäten als die oben beispielhaft genannten herkömmlichen Vorverarbeitungsketten. Mit Embedded Hardware, zumal unter Echtzeitbedingungen oder jedenfalls innerhalb begrenzter Zeitfenster beispielsweise durch die Förderbewegung der aufzunehmenden Objekte, ist das nicht leistbar. Eine herkömmliche Lösung ist die Verwendung spezialisierter Hardware beziehungsweise von Co-Prozessoren, wie NPUs (Neural Processing Units) oder GPUs (Graphics Processing Unit). Solche Bausteine sind aber in der Regel in einer Embedded-Architektur auch nicht verfügbar.

In der US 9 858 496 B2 wird eine Objekterfassung und Klassifikation in Bildern mit Hilfe von speziellen neuronalen Netzen diskutiert, nämlich RPNs (region proposal network). Um mehr Rechenleistung zu erhalten, können verschiedene Bausteine einschließlich ASICs (Application-Specific Integrated Circuits) oder FPGAs genutzt werden. Das hat jedoch keinen besonderen Zusammenhang zum Lesen von Codes.

Die US 2018/0046903 A1 schlägt ganz allgemein eine heterogene Architektur mit einer CPU und einem FPGA vor, um die Verarbeitung eines CNN zu beschleunigen. Dabei wird aber lediglich computer vision als Hintergrund erwähnt, eine genauere Implementierung oder gar die Anwendung auf das Lesen von Codes wird nicht angegeben.

He, Kaiming; Zhang, Xiangyu; Ren, Shaoqing; Sun, Jian (2015-12-10), "Deep Residual Learning for Image Recognition", arXiv:1512.03385 befassen sich mit dem Problem, dass tiefe neuronale Netze mit zahlreichen Schichten einen ungeheuren Trainingsaufwand erfordern. Das kann durch sogenannte "residual connections" verbessert werden, d.h. Verbindungen, die Schichten überspringen. Hierbei handelt es sich um eine ganz allgemeine Technik ohne Bezug zum Codelesen.

Die EP 3 428 834 B1 nutzt einen klassischen Decoder, der mit Verfahren ohne maschinelles Lernen arbeitet, um einen für maschinelles Lernen ausgebildeten Klassifikator oder spezieller ein neuronales Netz zu trainieren. Mit der Vorverarbeitung oder dem Auffinden von Codebereichen befasst sich dieses Dokument jedoch nicht näher.

In keinem bisher bekannten Ansatz ist es gelungen, die ungeheure Rechenlast zum Verarbeiten hochauflösender Bilder durch CNNs geeignet zu reduzieren oder zu verteilen, so dass auch Hardwarebausteine mit geringer bis moderater Leistungsfähigkeit zum Einsatz kommen könnten.

Es ist daher Aufgabe der Erfindung, die Verarbeitung von Bildern mit neuronalen Netzen insbesondere für das Codelesen zu verbessern.

Diese Aufgabe wird durch eine Kamera und ein Verfahren zum Verarbeiten von Bilddaten nach Anspruch 1 beziehungsweise 15 gelöst. Die Kamera ist vorzugsweise als kamerabasierter Codeleser ausgebildet. Ein Bildsensor nimmt Bilddaten mit einer Vielzahl von Pixeln auf, typischerweise hochaufgelöst mit mehreren Megapixel. Eine erste Verarbeitungseinheit liest die Bilddaten des Bildsensors ein, also das vorzugsweise hochaufgelöste Rohbild. Das Einlesen erfolgt als Bilddatenstrom (Streaming) in Gruppen benachbarter Pixel. Die Kamera umfasst außerdem eine zweite Verarbeitungseinheit zum Verarbeiten von Bilddaten, die jedoch vorzugsweise nicht direkt mit dem Bildsensor verbunden ist sowie einen Speicher für Bilddaten und Verarbeitungsergebnisse. Verarbeitungsergebnisse sind beispielsweise bearbeitete Bilddaten sowie daraus gewonnene Merkmale und Eigenschaften.

Die Verarbeitung der Bilddaten erfolgt zumindest teilweise durch ein neuronales Netz, das auf der ersten Verarbeitungseinheit, der zweiten Verarbeitungseinheit oder beiden Verarbeitungseinheiten implementiert ist. Das neuronale Netz ist vorzugsweise ein CNN (Convolutional Neural Network) und wird im Folgenden häufig so angesprochen. In den bisher bekannten Implementierungen streamt die erste Verarbeitungseinheit die Bilddaten zunächst in den Speicher, gegebenenfalls nach Vorverarbeitungen mit klassischen Verfahren. Danach erfolgt dann die Verarbeitung durch ein neuronales Netz, wobei dann eine verteilte Last auf erste und zweite Verarbeitungseinheit denkbar ist.

Die Erfindung geht von dem Grundgedanken aus, die Bilddaten schon während des Einlesens in einem neuronalen Netz zu verarbeiten. Dazu ist mindestens die erste Schicht des neuronalen Netzes auf der ersten Verarbeitungsschicht implementiert, und dieser ersten Schicht werden eingelesene Gruppen von Bildpunkten bereits zugeführt, noch während weitere Gruppen von Bilddaten von dem Bildsensor eingelesen werden. Es können auch eine zweite und weitere Schichten des neuronalen Netzes auf der ersten Verarbeitungsschicht implementiert sein (Early Layers, frühe Schichten), die dann ihre Verarbeitung beginnen, sobald die vorhergehende Schicht ausreichend Zwischenergebnisse erzeugt hat. Das neuronale Netz beginnt also seine Verarbeitung beziehungsweise setzt sie fort, sobald jeweils genug Gruppen von Bilddaten für den nächsten Verarbeitungsschritt eingelesen sind. Parallel oder jedenfalls für praktische Belange parallel zu dieser Verarbeitung werden immer noch weitere Gruppen von Bilddaten eingelesen, bis irgendwann das Bild vollständig ist und nur noch die verbleibenden Verarbeitungsschritte für die zuletzt eingelesenen Bilddaten nachzuholen sind. Das neuronale Netz arbeitet "on the fly" beziehungsweise schon während des Streamens eines Bildes.

Die Erfindung hat den Vorteil, dass die Verarbeitung auf besonders günstige Weise auf mehrere Verarbeitungseinheiten verteilt wird. Besonders geeignet sind dazu heterogene Hardwarearchitekturen. Durch die frühe und schnelle Verarbeitung mindestens der ersten Schicht noch während des Einlesens der Bilddaten stehen die Zwischenergebnisse oder Merkmale der mindestens ersten Schicht sehr schnell und sogar nach konstanter Bearbeitungszeit zur Verfügung. Das ermöglicht die Verarbeitung mit neuronalen Netzen auch auf Systemen mit begrenzten Hardwareressourcen, insbesondere mit Embedded Hardware. Die erfindungsgemäße Aufgabenverteilung und Implementierung löst auch ein weiteres Problem, das in den einleitend diskutierten Dokumenten nicht angesprochen ist, nämlich dass eine enorme Bandbreite für die Datenübertragung zwischen den Verarbeitungsbausteinen erforderlich ist, die ein neuronales Netz verarbeiten. Selbst noch bei an sich ausreichenden Rechenkapazitäten könnte dies ansonsten zu einem Flaschenhals werden, der eine Verarbeitung unter den geforderten zeitlichen Rahmenbedingungen verhindern würde.

Die Gruppe benachbarter Bildpunkte ist vorzugsweise eine Bildzeile oder ein Teil davon, somit bereits Bildzeilen mit der ersten Schicht verarbeitet werden, noch während weitere Bildzeilen eingelesen werden. Das Bild wird demnach zeilenweise von dem Bildsensor eingelesen beziehungsweise gestreamt, und die Verarbeitung erfolgt zeilenorientiert. Immer sobald genug Bildzeilen für den Faltungskern der ersten Schicht Bildzeilen eingelesen sind, kann der nächste Verarbeitungsschritt erfolgen. Dazu weist die erste Verarbeitungseinheit vorzugsweise einen Bildpuffer auf, in dem rollierend eine entsprechende Anzahl Bildzeilen zwischengespeichert wird. Prinzipiell kann in gleicher Weise statt mit Bildzeilen auch mit Bildspalten gearbeitet werden. Das wird hier lediglich als Unterschied in der Definition der Koordinaten aufgefasst und nicht unterschieden.

Die erste Verarbeitungseinheit weist bevorzugt ein FPGA (Field Programmable Gat Array) und/oder die zweite Verarbeitungseinheit einen Mikroprozessor (CPU) auf. Ein FPGA ist besonders geeignet für eine Echtzeitverarbeitung großer Datenmengen mit vergleichsweise einfachen einzelnen Rechenoperationen, wie sie bei den Matrixoperationen der diskreten Faltung in der mindestens ersten Schicht des neuronalen Netzes anfallen. Eine CPU dagegen ist viel flexibler und von sich aus zu komplexeren Rechenschritten in der Lage, und das ist für die Weiterverarbeitung von Vorteil.

Das neuronale Netz ist vorzugsweise für eine Segmentierung der Bilddaten ausgebildet, mit der interessierende Bereiche und insbesondere Coderegionen aufgefunden werden. Diese Aufgabe des Identifizierens und Lokalisierens von Coderegionen oder Codekandidaten, die das eigentliche Codelesen vorbereitet, muss mit den hochaufgelösten Bildern arbeiten und deshalb mit sehr große Datenmengen zurechtkommen. Indem erfindungsgemäß die Verarbeitung bereits während des Einlesens oder "on the fly" stattfindet, wird die Verarbeitungszeit deutlich reduziert und damit handhabbar. Außerdem müssen nur die Verarbeitungsergebnisse über die gefundenen Coderegionen ausgegeben werden. Ein zusätzlicher Datentransfer für Eingabedaten der ersten Verarbeitungseinheit ist nicht erforderlich, außer den rohen Bilddaten, die jedoch ohnehin in jedem Fall einmal aus dem Bildsensor gelesen werden müssen.

Die mindestens erste Schicht des neuronalen Netzes erzeugt bevorzugt auf der ersten Verarbeitungseinheit eine Merkmalskarte, die als Verarbeitungsergebnis in dem Speicher abgelegt wird. Eine Merkmalskarte (Feature Map) ist das Ergebnis einer jeweiligen Schicht eines CNNs. Die Merkmalskarte der ersten Schicht, oder soweit mehrere Schichten auf der ersten Verarbeitungseinheit implementiert sind, diejenige der letzten dieser Schichten, wird zur weiteren Verarbeitung insbesondere durch die zweite Verarbeitungseinheit gespeichert. Weitere Schichten des CNNs, ein anderes CNN oder auch ein klassisches Verfahren können sich dann die Merkmalskarte zunutze machen.

Die Merkmalskarte umfasst vorzugsweise eine Wahrscheinlichkeitskarte, wo sich in den Bilddaten Codes befinden. Das ist demnach ein mögliches Ausgabeformat für das Ergebnis einer Segmentierung nach Codes. Aus dieser Wahrscheinlichkeitskarte kann sehr schnell erfasst werden, mit welchen Regionen in der begrenzten Decodierzeit am ehesten erfolgreiche Leseversuche unternommen werden. Die Wahrscheinlichkeitskarte kann je Ort mehr als eine Information enthalten, beispielsweise jeweils eine Wahrscheinlichkeit für unterschiedliche Codearten, wie 1 D-Codes und 2D-Codes oder auch weiter ausdifferenziert nach verschiedenen 1D- und 2D-Codetypen.

Die Merkmalskarte hat bevorzugt eine geringere Auflösung als die Bilddaten des Bildsensors. Mit den hochaufgelösten ursprünglichen Bilddaten soll vorzugsweise nur die erste Verarbeitungseinheit beziehungsweise die mindestens erste Schicht des neuronalen Netzes arbeiten müssen. Im Verlauf der weiteren Verarbeitung reduziert sich die Auflösung. Die zu speichernde Merkmalskarte enthält bereits eine deutliche reduzierte Datenmenge. Das gilt insbesondere für die Wahrscheinlichkeitskarte, denn es ist nicht erforderlich, für jedes einzelne Pixel anzugeben, ob es zu einem Code gehört, sondern nur für Regionen ab einer bestimmten Größe. Beispielsweise kann ein Bild in Kacheln mit n x m Pixeln unterteilt werden, und für jede Kachel wird ein Merkmal oder, wenn die Merkmale besser differenzieren sollen, eine Gruppe von Merkmalen in der Merkmalskarte gespeichert.

Die erste Verarbeitungseinheit weist bevorzugt mindestens einen ersten Pufferspeicher zum Zwischenspeichern von Verarbeitungsergebnissen der mindestens ersten Schicht auf. Die eingelesenen Gruppen benachbarter Pixel werden vorzugsweise zunächst in einen Bildpuffer geschrieben. Der erste Pufferspeicher ist nicht für die ursprünglichen Bilddaten gedacht, sondern für die Verarbeitungsergebnisse der ersten Schicht des neuronalen Netzes. Die Größe des Pufferspeichers ist bevorzugt gerade so bemessen, dass genug Verarbeitungsergebnisse gespeichert werden können, um den folgenden Verarbeitungsschritt der nachfolgenden Schicht zu speisen. Wenn nur die erste Schicht auf der ersten Verarbeitungseinheit implementiert ist, dann genügt ein erster Pufferspeicher für eine Zeile der Merkmalskarte, die dann jeweils in den Speicher geschrieben und neu befüllt wird. Ist auf der ersten Verarbeitungseinheit eine zweite Schicht implementiert, so richtet sich die Größe des ersten Pufferspeichers vorzugsweise an der Größe der Faltungskerne der zweiten Schicht aus. Für die Verarbeitungsergebnisse der zweiten Schicht ist dann ein zweiter Pufferspeicher vorgesehen, dessen Auslegung entsprechend gewählt ist, d.h. nur eine Zeile, falls keine dritte Schicht mehr auf der ersten Verarbeitungseinheit folgt oder sonst an deren Faltungskerne angepasst. Das kann so mit dritten und weiteren Schichten und Pufferspeichern fortgesetzt werden. Bildpuffer und Pufferspeicher werden vorzugsweise rollierend nach dem Prinzip einer FIFO (First In, First Out) beschrieben, so dass jeweils die aktuell benötigten Bilddaten und Zwischenergebnisse bereitstehen.

Mindestens eine auf der ersten Verarbeitungseinheit implementierte Schicht des neuronalen Netzes weist bevorzugt eine Schrittgröße größer eins auf, d.h. deren Faltungskern wird um jeweils mehr als einen Bildpunkt verschoben. Eine Schrittgröße von mehreren Bildpunkten (large strides) sorgt dafür, dass sich die Auflösung der Ausgangs- gegenüber den Eingangsdaten der Schicht rasch verringert. Daher erfolgt diese Maßnahme vorzugsweise schon in der ersten Schicht, kann aber auch eine andere, mehrere oder alle Schichten auf der ersten Verarbeitungseinheit betreffen.

Mindestens eine auf der ersten Verarbeitungseinheit implementierte Schicht des neuronalen Netzes weist bevorzugt einen gestreckten Faltungskern auf (dilated convolution), der nicht direkt benachbarte Pixel verarbeitet. Ein solcher Faltungskern arbeitet mit Pixeln, die zueinander um i>1 Pixel beabstandet sind. Dadurch wird der jeweilige Erfassungsbereich erweitert. Erneut betrifft dies vorzugsweise die erste Schicht und ist alternativ für beliebige Schichten der ersten Verarbeitungseinheit denkbar.

Die erste Verarbeitungseinheit ist bevorzugt dafür ausgebildet, die eingelesenen Bilddaten in dem Speicher abzulegen, insbesondere nach einer Vorverarbeitung. Erfindungsgemäß werden die eingelesenen Bilddaten der ersten Schicht des neuronalen Netzes zugeführt. Nach dieser Ausführungsform werden sie in einem zusätzlichen Pfad der ersten Verarbeitungseinheit auch in den Speicher geschrieben. Damit steht das ursprüngliche hochaufgelöste Bild separat für weitere Verarbeitungen zur Verfügung, insbesondere einem Decoder der zweiten Verarbeitungseinheit. Ein Bildpuffer der ersten Schicht kann hierfür mitgenutzt werden, um gleich größere Datenblöcke des Bildes in den Speicher zu schreiben. Es ist denkbar, in dem zusätzlichen Pfad mit klassischen oder auch lernenden Verfahren Vorverarbeitungsschritte durchzuführen, beispielsweise eine Bildkompression, eine Helligkeitskorrektur, Erzeugung eines Binärbildes und dergleichen. Das Ergebnis dieser Vorverarbeitungen darf nicht mit demjenigen der mindestens ersten Schicht des neuronalen Netzes auf der ersten Verarbeitungseinheit verwechselt werden, es handelt sich um zusätzliche Daten.

Vorzugsweise sind weitere Schichten des neuronalen Netzes und/oder ist ein weiteres neuronales Netz auf der zweiten Verarbeitungseinheit implementiert, um die Bilddaten und/oder Verarbeitungsergebnisse der ersten Verarbeitungseinheit weiter zu verarbeiten. Das neuronale Netz ist demnach in frühe Schichten auf der ersten Verarbeitungseinheit und weitere Schichten auf der zweiten Verarbeitungseinheit aufgeteilt. Die weiteren Schichten können alternativ als eigenes neuronales Netz aufgefasst werden, das ist letztlich nur ein sprachlicher Unterschied. Die weiteren Schichten beziehungsweise das weitere neuronale Netz der zweiten Verarbeitungseinheit arbeiten auf Basis der von den frühen Schichten in dem Speicher abgelegten Merkmalskarte und gegebenenfalls dem zusätzlich gespeicherten hochaufgelösten Bild. Diese Verarbeitung erfolgt nicht mehr während des Einlesens oder "on the fly", wobei aber mit der Verarbeitung begonnen werden könnte, sobald die erforderlichen Daten im Speicher abgelegt sind.

Die weiteren Schichten sind und/oder das weitere neuronale Netz ist bevorzugt zum Lesen von Codes anhand der Verarbeitungsergebnisse der mindestens ersten Schicht ausgebildet. Dabei werden insbesondere die Segmentierungsergebnisse der frühen Schichten auf der ersten Verarbeitungseinheit beispielsweise in Form einer Wahrscheinlichkeitskarte genutzt, um Coderegionen in dem zusätzlich im Speicher abgelegten hochaufgelösten Bild aufzufinden. Mit diesen Coderegionen werden dann Leseversuche des Codeinhalts durch die weiteren Schichten beziehungsweise das weitere neuronale Netz unternommen.

Die zweite Verarbeitungseinheit weist vorzugsweise einen klassischen Decoder ohne neuronales Netz zum Lesen von Codes auf. Klassisch bedeutet, dass hier keine lernenden Verfahren und insbesondere kein neuronales Netz zum Einsatz kommt. Der klassische Decoder nutzt die Ergebnisse der frühen Schichten auf der ersten Verarbeitungseinheit, insbesondere eine Wahrscheinlichkeitskarte einer Segmentierung nach Coderegionen. Es ist nicht ungewöhnlich, wenn versucht wird, einen Code mit verschiedenen Decodern zu lesen. Daher ist auch denkbar, Coderegionen parallel oder nacheinander sowohl mit weiteren Schichten eines neuronalen Netzes beziehungsweise einem weiteren neuronalen Netz als auch mit mindestens einem klassischen Decoder zu bearbeiten.

Vorzugsweise sind mindestens zwei neuronale Netze auf der zweiten Verarbeitungseinheit implementiert, die jeweils Verarbeitungsergebnisse der ersten Verarbeitungseinheit weiterverarbeiten. Diese beiden neuronalen Netze können als spätere Schichten der frühen Schichten auf der ersten Verarbeitungseinheit angesehen werden, wobei letztere sozusagen nach deren Training eingefroren und dann in den beiden neuronalen Netzen auf unterschiedliche Weise fortgesetzt sind. Damit werden die Verarbeitungsergebnisse der frühen Schichten der ersten Verarbeitungseinheit mehrfach wiederverwendet oder je nach Situation mit unterschiedlichen Zielen weiterverarbeitet. Beispielsweise lesen die beiden neuronalen Netze unterschiedliche Codetypen, oder mindestens eines der neuronalen Netze verfolgt einen ganz anderen Zweck.

Die Kamera weist mindestens einen zusätzlichen Verarbeitungsbaustein für Verarbeitungsschritte des neuronalen Netzes auf. Es gibt damit eine dritte Verarbeitungseinheit oder sogar noch mehr Verarbeitungseinheiten. Damit kann die Rechenlast noch besser verteilt werden. Besonders bevorzugt ist der zusätzliche Verarbeitungsbaustein eine NPU (Neural Processing Unit) oder eine GPU (Graphics Processing Unit). Solche Bausteine stehen meist auf einer Embedded Hardware nicht zur Verfügung. Denkbar ist ein Aufrüsten aber, und dann können noch wesentlich leistungsfähigere neuronale Netze implementiert werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung der beispielhaften Montage einer Kamera über einem Förderband;
- Fig. 2a-b: Beispielbilder mit zu lesenden Codes vor einem variierenden Hintergrund;
- Fig. 3: eine schematische Darstellstellung der herkömmlichen Verarbeitung von Bilddaten mit einem neuronalen Netz;
- Fig. 4: eine schematische Darstellung der Verarbeitung von Bilddaten durch ein neuronales Netz bereits während des Einlesens der Bilddaten in einer Ausführungsform der Erfindung;
- Fig. 5: eine beispielhafte Darstellung der frühen Schichten eines neuronalen Netzes zum Verarbeiten von Bilddaten bereits während des Einlesens;
- Fig. 6: eine schematische Darstellung der Verarbeitung von Bilddaten durch ein neuronales Netz bereits während des Einlesens der Bilddaten in einer weiteren Ausführungsform der Erfindung mit einem zusätzlichen Verarbeitungsbaustein; und
- Fig. 7: eine schematische Darstellung der Verarbeitung von Bilddaten durch ein neuronales Netz bereits während des Einlesens der Bilddaten in einer weiteren Ausführungsform der Erfindung, wobei die Ergebnisse der frühen Schichten von mehreren neuronalen Netzen genutzt werden.

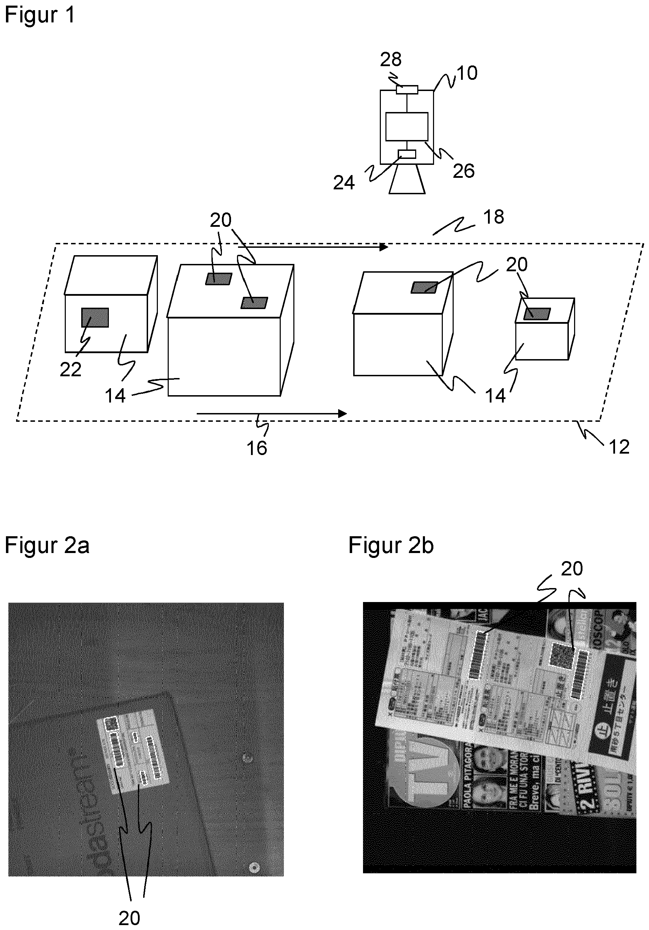

Figur 1 zeigt eine Kamera 10, die über einem Förderband 12 montiert ist, welches Objekte 14, wie durch den Pfeil 16 angedeutet, durch den Erfassungsbereich 18 der Kamera 10 fördert. In diesem Anwendungsbeispiel tragen die Objekte 14 an ihren Außenflächen Codes 20, die von der Kamera 10 erfasst und ausgewertet werden. Die Codes 20 können von der Kamera 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Kameras 10 aus verschiedenen Richtungen montiert sein, um eine sogenannte Omnilesung aus allen Richtungen zu ermöglichen. Die Anordnung der mehreren Kameras 10 zu einem Lesesystem erfolgt in der Praxis meist als Lesetunnel. Diese stationäre Anwendung der Kamera10 an einem Förderband ist in der Praxis sehr häufig. Die Erfindung bezieht sich aber auf die Verarbeitung von Bilddaten beziehungsweise die Kamera 10 selbst, so dass dieses Beispiel nicht einschränkend verstanden werden darf. Anstelle des Codelesens beziehungsweise einer Kamera 10, die als kamerabasierter Codeleser ausgebildet ist, sind ebenso andere Bildauswertungsaufgaben etwa zum Vermessen oder zur Inspektion von Objekten 14 für die Kamera 10 möglich.

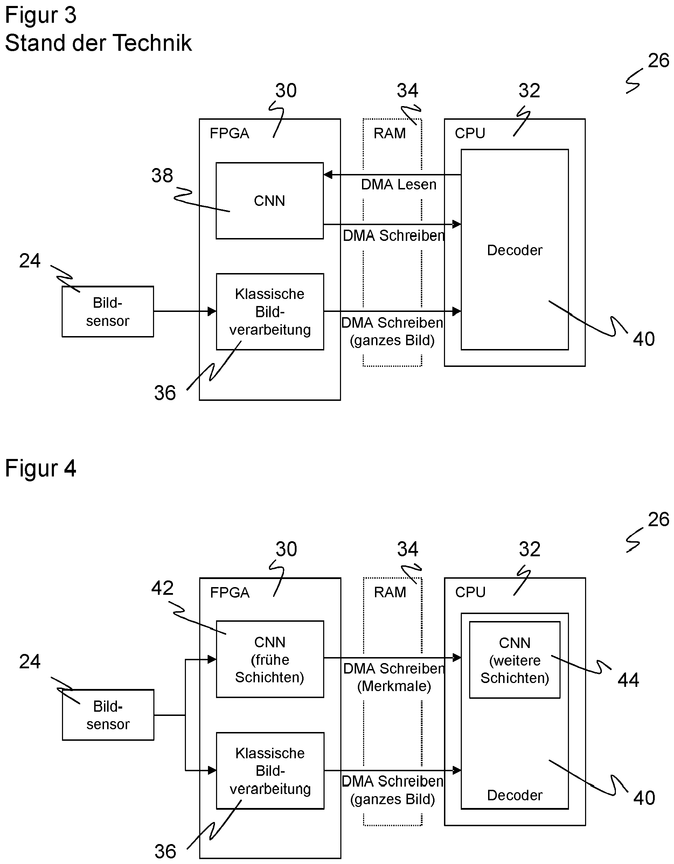

Die Kamera 10 erfasst mit einem Bildsensor 24 Bilddaten der geförderten Objekte 14 und der Codes 20, die von einer Auswertungseinheit 26 mittels Bildauswertung und Decodierverfahren weiterverarbeitet werden. Die Auswertungseinheit 26 ist vorzugsweise in Embedded Hardware implementiert und weist mehrere Auswertungsbausteine auf. Die genauere Ausgestaltung der Auswertungseinheit 26 sowie deren Verarbeitung der Bilddaten wird später unter Bezugnahme auf die Figuren 3 bis 7 genauer erläutert. Über eine Schnittstelle 28 gibt die Kamera 10 Informationen aus, wie gelesene Codes oder Bilddaten.

Figur 2a-b zeigt zwei Beispielbilder mit Codes 20 vor unterschiedlichen Hintergründen. Ein erster Schritt zum Lesen der Codes 20 ist die Segmentierung, mit der überhaupt Codekandidaten identifiziert und lokalisiert werden. Das Ergebnis einer erfolgreichen Segmentierung ist in Figur 2a-b mit weißen Rahmen hervorgehoben. Vorgegebene Kriterien führen hier nicht verlässlich zum Erfolg. Mit einem neuronalen Netz kann die Erkennungsrate vor unterschiedlichen Hintergründen verbessert werden. Die Segmentierung von Codes 20 ist ein wichtiges Anwendungsbeispiel. Es können jedoch auch andere Bildmerkmale mit der nun beschriebenen Architektur durch neuronale Netze gefunden werden.

Figur 3 zeigt eine herkömmliche Verarbeitung eines Bilddatenstroms von dem Bildsensor 24 durch eine Auswertungseinheit 26, die ein FPGA 30, eine CPU 32 und einen Speicher 34 aufweist. Die Bilddaten werden von dem FPGA 30 eingelesen und als ganzes hochaufgelöstes Bild in den Speicher 34 geschrieben. Währenddessen kann eine klassische Vorverarbeitungseinheit 36 den Bilddatenstrom bereits bearbeiten, beispielsweise Filter auf das Bild anwenden oder auch eine Segmentierung vornehmen. Diese Segmentierung beruht jedoch auf vorgegebenen Kriterien und klassischen Verfahren ohne maschinelles Lernen, und deshalb gibt es noch eine recht hohe Fehlerquote an nicht erkannten Codes 20 oder umgekehrt an Bereichen, die fälschlich als Codes 20 erkannt wurden.

Ein neuronales Netz 38, mit dem das Bild bearbeitet wird, ist ebenfalls auf dem FPGA 30 implementiert. Es greift auf den Speicher 34 zu, um das Bild einzulesen, und schreibt die Verarbeitungsergebnisse des neuronalen Netzes 38 in den Speicher 34 zurück. Das neuronale Netz 38 erwartet demnach eine Zugriffsmöglichkeit auf das ganze Bild, so dass die Bilderfassung der Vorverarbeitungseinheit 36 abgeschlossen sein muss, ehe das neuronale Netz seine Verarbeitung beginnt. Das neuronale Netz 38 arbeitet einem Decoder 40 der CPU 32 zu, mit dem Codes 20 gelesen werden, beziehungsweise liest möglicherweise die Codes 20 schon selbst, so dass dem Decoder 40 eher verwaltende Aufgaben zugewiesen sind.

Dieses Vorgehen hat mehrere Nachteile. Zum einen geht Zeit verloren, da die Verarbeitung des neuronalen Netzes 38 erst beginnen kann, wenn ein Bild vollständig erfasst ist. Weiterhin muss das FPGA 38 die beiden Aufgaben des Einlesens beziehungsweise der Vorverarbeitung 36 und des neuronalen Netzes 38 mit seinen begrenzten Rechenressourcen vereinen. Das kann durch ein besonders leistungsfähiges FPGA 30, ein weiteres FPGA oder einen sonstigen Co-Prozessor wie eine GPU, NPU oder ein DSP gelöst werden, aber dieser zusätzliche Aufwand soll eigentlich vermieden werden.

Außerdem behebt das nicht den weiteren Nachteil, der sich auch in der Situation der Figur 3 ergibt, dass ein ganz erheblicher Datenaustausch stattfinden muss, der entsprechende Bandbreiten fordert beziehungsweise das System ausbremst. Es muss nämlich das ganze Bild zunächst von dem FPGA 30 eingelesen und in den Speicher 34 geschrieben und dann nach vollständigem Bildtransfer erneut aus dem Speicher in das FPGA 30 oder den sonstigen zuständigen Baustein übertragen und dort von dem neuronalen Netz 38 verarbeitet werden, woraufhin dann auch noch die Verarbeitungsergebnisse in dem Speicher 34 abgelegt werden. In einem Echtzeitsystem oder bereits bei begrenztem Verarbeitungszeitfenster, bis sich etwa in der Anwendung gemäß Figur 1 das nächste Objekt 14 in dem Erfassungsbereich 18 befindet, stellt dies einen erheblichen Kommunikationsflaschenhals dar.

Figur 4 zeigt die Verarbeitung des Bilddatenstroms von dem Bildsensor 24 durch die Auswertungseinheit 26 in einer Ausführungsform der Erfindung. Im Prinzip wird eine vergleichbare Hardware mit einem FPGA 30, einer CPU 32 und einem Speicher 34 wie in Figur 3 verwendet, aber nun anders genutzt. Das FPGA 30 steht stellvertretend für einen Hardwarebaustein einer ersten Verarbeitungseinheit, der vorzugsweise echtzeitfähig und jedenfalls in der Lage ist, die Datenmengen von dem Bildsensor 24 zu bewältigen. Entsprechend steht die CPU 32 für eine zweite Verarbeitungseinheit, die möglichst flexibel programmierbar ist, aber nicht unbedingt über eine geeignete Schnittstelle zum Auslesen von Bilddaten mit Megapixelauflösung bei üblichen Frameraten verfügt. Die CPU 32 greift auf die von dem FPGA 30 in dem Speicher 34 bereitgestellten Daten zu, um mit ihrem Decoder 40 die Codes 20 zu lesen.

Der Kanal mit der klassischen Vorverarbeitung 36, über den das FPGA 30 die Bilddaten zu einem vollständigen Bild zusammensetzt und dieses in dem Speicher 34 ablegt, bleibt vorzugsweise bestehen. Damit kann der Decoder 40 auf das volle, hochaufgelöste Bild zugreifen. Dabei sind Vorverarbeitungsschritte mit klassischen Verfahren denkbar.

Die Verarbeitung mittels einem neuronalen Netz ist aber erfindungsgemäß anders organisiert. Die frühen Schichten 42 (Early Layers) des neuronalen Netzes sind auf dem FPGA 30 implementiert. Das kann auch nur die erste Schicht sein. Weitere Schichten 44 sind dann auf der CPU 32 implementiert. Man kann diese weiteren Schichten 44 auch als separates neuronales Netz betrachten, das als Eingangsdaten das Verarbeitungsergebnis der frühen Schichten 42 verwendet. Denkbar wäre weiterhin, dass der Decoder 40 nicht mehr mit einem neuronalen Netz, sondern mit herkömmlichen Verfahren arbeitet.

Die frühen Schichten 42 des neuronalen Netzes arbeiten bereits mit dem eingehenden Bilddatenstrom, noch während weitere Bilddaten eingelesen werden. Die Verarbeitungsergebnisse der frühen Schichten 42, genaugenommen der letzten dieser frühen Schichten 42, werden in dem Speicher 34 abgelegt. Der Umweg der Daten über den Speicher 34, ehe die Verarbeitung in dem neuronalen Netz beginnen kann, entfällt dabei. Das erfindungsgemäße neuronale Netz beziehungsweise dessen erste Schicht erwartet kein vollständiges Bild, sondern verarbeitet bereits die aktuell eingelesenen partiellen Bilddaten. Der Kommunikationsflaschenhals ist damit auch beseitigt, denn es ist nicht länger erforderlich, das ganze Bild nochmals in das FPGA 30 einzulesen. Speicherzugriffe sind lediglich dafür erforderlich, Stück für Stück die Verarbeitungsergebnisse der frühen Schichten 42 und optional über die klassische Vorverarbeitung 36 nach und nach das Gesamtbild zu speichern.

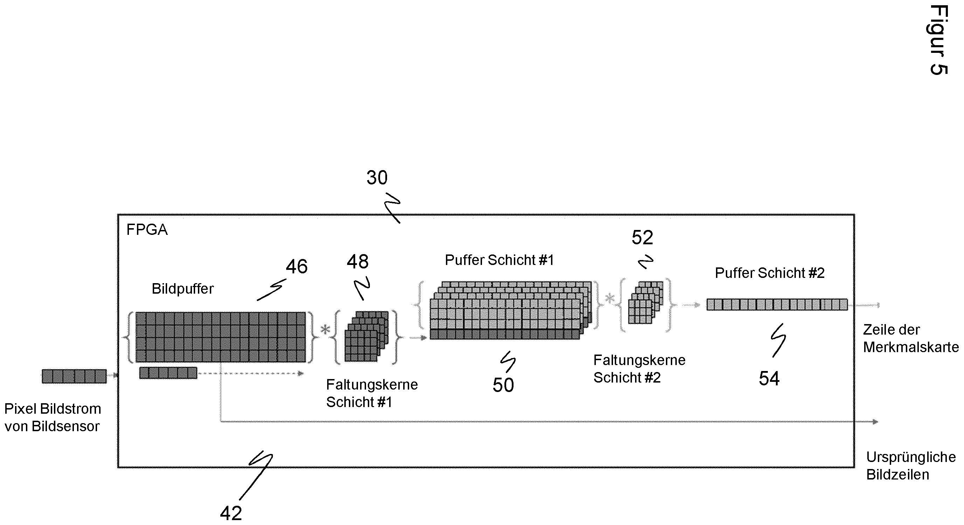

Figur 5 zeigt schematisch die frühen Schichten 42 auf dem FPGA 30, um die Verarbeitung durch das neuronale Netz bereits während des Einlesens von Bilddaten näher zu erläutern. Dabei sollen zunächst kurz einige Fachbegriffe eingeführt werden.

Als neuronales Netz wird vorzugsweise ein CNN (Convolutional Neural Network) eingesetzt, was eine Ausprägung eines tiefen neuronalen Netzes mit besonderer Eignung für die Bildverarbeitung ist. Ein CNN führt eine Reihe von diskreten Faltungen (Convolution) durch, denen jeweils eine nicht-lineare Aktivierungsfunktion folgt. Eine jeweilige Kombination von diskreter Faltung und Aktivierungsfunktion bildet eine Schicht (Layer) des CNN. Die Ausgabe einer Schicht ist eine Merkmalskarte (Feature Map).

Die einzelnen diskreten Faltungen werden durch Matrixoperationen mit Faltungskernen oder Faltungsmatrizen (Convolutional Kernel) umgesetzt. Die Größe eines Faltungskerns wird mit [N, N, C1, C2] bezeichnet, wobei [N,N] die örtliche Ausdehnung, C1 die Anzahl Kanäle der Eingangsdaten und C2 die Anzahl Kanäle der Ausgangsdaten ist. Wenn die Eingangsdaten nur einen Kanal umfassen, wie im Falle eines Grauwertbildes, so wird die Größe des Faltungskerns zu [N, N, 1, C2] oder kurz [N, N, C]. Die Größe der Faltungskerne ist durch die Architektur des CNNs vorgegeben, und die Werte in der Matrix werden beim Training des CNN eingelernt.

In Figur 5 verläuft die Verarbeitung in den dargestellten frühen Schichten 42 auf dem FPGA 30, hier beispielhaft zwei Schichten, von links nach rechts. Als Eingangsdaten werden Pixel von dem Bildsensor 24 eingelesen. Diese Bilddaten kommen als Bilddatenstrom benachbarter Pixel an, vorzugsweise als Bildzeilen. Die eingelesenen Pixel werden in einem Bildpuffer 46 zwischengespeichert, so dass unerheblich ist, wie viele benachbarte Pixel je Einleseoperation eingehen. Sobald in dem Bildpuffer 46 genügend Bildzeilen gespeichert sind, kann die Verarbeitung durch die erste Schicht beginnen und die erste Ausgabezeile durch diskrete Faltung beziehungsweise Matrixoperationen der gespeicherten Bildzeilen und der ersten Faltungskerne 48 der ersten Schicht berechnet werden. Die einzelne Berechnung ähnelt einer üblichen Bildfilterung mit einem Filterkern, wobei allerdings parallel mehrere Ausgangsbilder entstehen, nämlich jeweils ein Ausgangsbild pro Filterkern. Außerdem sind die Begrifflichkeiten anders, es handelt sich nicht um ein eigentliches Ausgangsbild, sondern um eine Merkmalskarte, und diese wird in der Regel keinerlei optische Verbesserung aufweisen, sondern gemäß den gelernten Gewichten der Faltungskerne verändert.

Die ersten Faltungskerne 48 haben die Größe [N1, N1, C1], da das Eingangsbild in diesem Beispiel als Grauwertbild mit nur einem Kanal angenommen ist. Entsprechend der örtlichen Ausdehnung N1 werden für eine diskrete Faltung N1 Bildzeilen benötigt. Die Höhe des Bildpuffers 46 ist demnach durch die Höhe N1 der ersten Faltungskerne 48 und die Breite durch die Bildzeilen vorgegeben. Sobald die erste Schicht die ersten N Bildzeilen verarbeitet hat, wird die erste Bildzeile nicht mehr benötigt, da die zweite Ausgabezeile aus den Bildzeilen 2... N+1 berechnet wird. Der Bildpuffer 46 wird deshalb vorzugsweise rollierend nach dem FIFO-Prinzip verwendet. Der Bildpuffer 46 kann zusätzlich noch eine gewisse Reserve von einer oder einigen Bildzeilen für Verzögerungen zwischen dem Einlesen von dem Bildsensor 24 und der Weiterverarbeitung der ersten Schicht vorhalten.

Die Ausgabezeilen werden in einem ersten Puffer 50 der ersten Schicht gesammelt. In einer alternativen Ausführungsform, in der die frühen Schichten 42 überhaupt nur die erste Schicht umfassen, genügt ein erster Puffer 50 für lediglich eine Ausgabezeile, die in den Speicher 34 übertragen wird, sobald sie vollständig ist. In der Darstellung der Figur 5 mit zwei Schichten sammelt der erste Puffer 50 Ausgabezeilen für die Verarbeitung der zweiten Schicht.

Die zweiten Filterkerne 52 der zweiten Schicht haben eine Größe [N2, N2, C1, C2]. Die erste Schicht hat ja aus dem einkanaligen Grauwertbild C1 Kanäle ihrer ausgegebenen Merkmalskarte erzeugt, und die örtliche Ausdehnung N2 der zweiten Filterkerne 52 ist grundsätzlich unabhängig von der örtlichen Ausdehnung N1 der ersten Filterkerne 48. Ansonsten erfolgt die Verarbeitung in der zweiten Schicht analog der ersten Schicht. Sobald also N2 Zeilen in dem ersten Puffer 50 verfügbar sind, kann die Berechnung einer Ausgabezeile der zweiten Schicht erfolgen. Der erste Puffer 50 sollte daher mindestens N2 Ausgabezeilen der ersten Schicht zwischenspeichern können, und wie der Bildpuffer wird auch der erste Puffer 50 vorzugsweise rollierend verwendet.

Ein zweiter Puffer 54 der zweiten Schicht nimmt lediglich die jeweils zuletzt berechnete Ausgabezeile der zweiten Schicht auf. Die fertigen Ausgabezeilen sind Teil der Merkmalskarte, die das Verarbeitungsergebnis der frühen Schichten 42 auf dem FPGA 30 darstellen, und werden nach und nach in den Speicher 34 übertragen. Natürlich können alternativ auch mehrere Ausgabezeilen zwischengespeichert werden, ehe das FPGA sie in dem Speicher 34 ablegt.

Abweichend von der Darstellung der Figur 5 können eine dritte und weitere Schichten der frühen Schichten 42 auf dem FPGA 30 implementiert sein, wobei dann dritte Filterkerne, ein dritter Puffer und gegebenenfalls weitere Filterkerne und Puffer vorgesehen sind.

Zusätzlich zu der Merkmalskarte speichert das FPGA 30 vorzugsweise die ursprünglichen Bildzeilen in dem Speicher 34, damit das Originalbild in der weiteren Verarbeitung durch die CPU 32 und den Decoder 40 zur Verfügung steht. Dabei kann auch noch eine klassische Vorverarbeitung, gegebenenfalls auch eine Vorverarbeitung mit einem weiteren neuronalen Netz erfolgen. Letzteres zielt dann nicht darauf, das Bild nochmals zu segmentieren oder sonstige Merkmale zu extrahieren, sondern auf eine den klassischen Vorverarbeitungen entsprechende Aufbereitung.

Die Architektur des CNN beziehungsweise von dessen frühen Schichten 42 in Figur 5 ist vereinfacht. Allgemein genügt für das Codelesen beziehungsweise die Codesegmentierung ein relativ kleines CNN, das also nicht allzu viele Schichten aufweist. Dennoch wurde bereits darauf hingewiesen, dass konkret zwei Schichten auf dem FPGA 30 nur als Beispiel zu verstehen sind, wobei ohnehin je nach Ausführungsform weitere Schichten 44 auf der CPU 32 hinzukommen, die mit der entstandenen Merkmalskarte aus dem Speicher 34 arbeiten. Die Positionierung der Trennlinie, welche Schichten 42 auf dem FPGA 30 und welche Schichten 44 auf der CPU 32 implementiert werden, ist ein Designfreiheitsgrad. Eine bevorzugte Auslegung sieht vor, so viele Schichten 42 auf dem FPGA 30 unterzubringen, wie es dessen Rechen- und Speicherkapazitäten erlauben.

Figur 5 zeigt von den Schichten des CNN nur die Faltungskerne 48, 52. Darüber hinaus weist jede Schicht bevorzugt die typischen Elemente wie eine Normierung und eine nicht-lineare Aktivierungsfunktion auf. Es gibt noch eine Reihe weiterer Designoptionen für das CNN, die vorzugsweise, aber nicht notwendig einzeln oder in Kombination umgesetzt sind: Um das später noch erläuterte Training zu beschleunigen, sind auch schnelle Vorwärtsverbindungen (residual connections) nach der einleitend zitierten Arbeit von He et al. vorgesehen. Das CNN ist ein vollständig faltendes Netz ("fully convolutional"), in dem es keine vollständig verbundenen Schichten gibt. Mit anderen Worten nimmt die Auflösung der Merkmalskarten von Schicht zu Schicht ab. Zu Beschleunigung der Berechnungen ist die Zahl der Ausgangskanäle der Schichten auf höchstens 1.000 beschränkt. In den ersten Schichten werden Filterkerne mit Schrittgrößen ungleich eins ("large strides") verwendet, so dass sich die Auflösung rasch reduziert. Gestreckte Faltungskerne ("dilated convolutions") können den jeweiligen Erfassungskern erweitern. Schließlich lässt sich die Berechnung durch entkoppelte Faltungskerne (separable convolution kernels, insbesondere depthwise separable convoultion kernels) optimieren.

Durch die On-The-Fly- oder Pipeline-Verarbeitung der frühen Schichten 42 noch während des Einlesens weiterer Bilddaten kann die Rechenlast zwischen dem FPGA 30 und der CPU 32 verteilt werden, während zugleich der Datentransfer um Größenordnungen reduziert wird. Dadurch kann das CNN auch auf Hardware mit moderater Leistungsfähigkeit, insbesondere Embedded Hardware umgesetzt werden. Solche Hardwareanforderungen werden von verfügbaren Kameras 10 erfüllt, während Bandbreite des Datentransfers und Rechenleistung für die im Zusammenhang mit Figur 3 erläuterte Bearbeitung ganzer hochauflösender Bilder aus dem Speicher 34 mit einem CNN nicht ausreichen, jedenfalls nicht in den von einer Anwendung wie in Figur 1 vorgegebenen Zeitfenstern.

In einer bevorzugten Anwendung der Kamera 10 als Codeleser ist die Aufgabe des CNN, Codes 20 vorgegebener Typen zu lokalisieren. Die ausgegebene Merkmalskarte ist dann beispielsweise eine Wahrscheinlichkeitskarte, wo sich in dem aufgenommenen Bild Codes 20 bestimmter Codetypen befinden, wie 1D-Codes und 2D-Codes oder weiter ausdifferenzierte Codetypen. Die Wahrscheinlichkeitskarte hat so viele Kanäle wie die Anzahl der zu unterscheidenden Codetypen. Die Auflösung der Wahrscheinlichkeitskarte ist bevorzugt deutlich geringer als diejenige des hochaufgelösten Eingangsbildes. Das Eingangsbild ist dann sozusagen in Bildkacheln unterteilt, und es steht darin nur pro Bildkachel und nicht pro Einzelpixel ein Wahrscheinlichkeitswert für einen Code 20.

Bevor das CNN eingesetzt werden kann, muss es eingelernt oder trainiert werden. Dazu sind geeignete Trainingsdaten erforderlich. Üblicherweise wird ein überwachtes Training (supervised learning) durchgeführt, bei dem die richtigen, erwarteten Ergebnisse vorgegeben werden. Die Trainingsdaten sind entsprechend annotiert oder gelabelt. Sie müssen ein großes Spektrum an Variabilität abdecken, damit das CNN später flexibel mit Anwendungssituationen zurechtkommt, und daher ist eine manuelle Annotierung sehr aufwändig. Deshalb wird vorzugsweise nur als Ausgangspunkt ein Trainingsdatenset von Hand annotiert. Andere Trainingsbilder werden synthetisch erzeugt, diese sind durch ihre Entstehung schon annotiert. Aus diesem Grundstock können zahlreiche weitere annotierte Trainingsbilder durch simulierte Effekte gewonnen werden.

Es ergibt sich eine längere, aber dennoch nicht abschließende Liste, wie Trainingsbilder erzeugt oder verändert werden können: Codes mit zufälligem Inhalt, verschiedene Codetypen (EAN, Code 128, Code 39, Datamatrix, PDF, ...), Codes mit zufälliger Polarität oder zufälligen Ruhezonen, unvollständige Codes, Codes unterschiedlicher Modulbreite und -höhe, Codes in verschiedenen Posen und perspektivischen Verzerrungen, gedruckte und geprägte Codes (DPM, direct part marking), mehrere unterschiedliche Codes im selben Bild. Veränderungseffekte, die nicht den Code, sondern das Bild betreffen, sind beispielsweise Zufallsraschen (Gauss, Laplace, homogen, Perlin), Blurreffekte, nicht-lineare Verformungen, zufällige Hintergrundtexturen (Papier, Karton, Holz, Plastik, Metal, ...), Texte unterschiedlicher Schriftart und Schriftgröße sowie Lichteffekte (gleichmäßig und ungleichmäßig, Spots, ...).

Nach dem Training können noch einige Nachbearbeitungsschritte erfolgen, um die spätere Verarbeitungszeit zu optimieren. Die gelernten Gewichte in den diskreten Faltungskernen können mit Batchnormierungskoeffizienten aus dem Training reskaliert werden. Außerdem werden die Gewichte vorzugsweise für das FPGA 30 und/oder die CPU 32 quantisiert, beispielsweise auf 8 Bit oder 16 Bit.

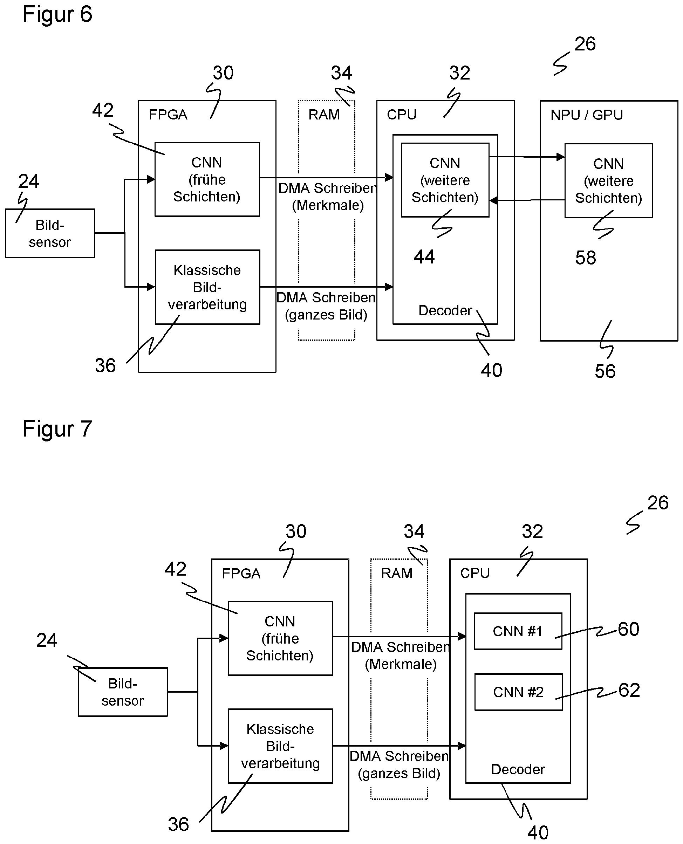

Figur 6 zeigt die Verarbeitung des Bilddatenstroms von dem Bildsensor 24 durch die Auswertungseinheit 26 in einer weiteren Ausführungsform der Erfindung. Im Unterschied zu Figur 4 ist hier noch mindestens ein zusätzlicher Hardwarebaustein 56 der Auswertungseinheit 26 vorgesehen. Dabei handelt es sich vorzugsweise um einen besonders für die Verarbeitung von CNNs geeigneten Baustein, wie eine NPU (Neural Processing Unit) oder eine GPU (Graphics Processing Unit). Es ist aber auch denkbar, dass der zusätzliche Hardwarebaustein 56 ein anderer Digitalbaustein ist, insbesondere ein weiteres FPGA oder eine weitere CPU. Durch die erfindungsgemäße Architektur und Aufteilung des CNNs in frühe Schichten 42, die eingehenden Bilddaten schon während des Einlesens oder Streamens verarbeiten, ist ein zusätzlicher Hardwarebaustein 56 nicht zwingend erforderlich, aber die Verarbeitung kann dadurch beschleunigt beziehungsweise damit ein komplexeres CNN eingesetzt werden. In der Darstellung der Figur 6 werden einige weitere Schichten 58 des CNN auf den zusätzlichen Hardwarebaustein 56 ausgelagert. Alternativ werden die weiteren Schichten 44 vollständig von der CPU 32 dorthin verschoben, oder der zusätzliche Hardwarebaustein 56 verarbeitet mindestens ein eigenes CNN für weitere Aufgaben. Es kann ein eigener Zugriff des zusätzlichen Hardwarebausteins 56 auf den Speicher 34 vorgesehen sein.

Figur 7 zeigt die Verarbeitung des Bilddatenstroms von dem Bildsensor 24 durch die Auswertungseinheit 26 in einer weiteren Ausführungsform der Erfindung. Es sind nun zwei CNNs 60, 62 vorgesehen, die auf die Merkmalskarte der frühen Schichten 42 zugreifen. Eines der CNNs 60, 62 kann den weiteren Schichten 44 in den sonstigen Ausführungsformen entsprechen. Es entstehen also zwei unterschiedliche CNNs 60, 62, die aber im ersten Teil der frühen Schichten 42 übereinstimmen, beispielsweise um unterschiedliche Codetypen zu lesen. In einer Variante wird der erreichte Trainingszustand der frühen Schichten 42 eingefroren und jeweils als Ausgangspunkt für das dann unterschiedliche Training der CNNs 60, 62 verwendet. In einer anderen Variante werden die frühen Schichten 42 in das erweiterte Training einbezogen, dürfen sich also beim jeweiligen Training der CNNs 60, 62 noch verändern. Es ist auch noch denkbar, dass ein klassisches Decodierverfahren der CPU 32 die Merkmalskarte der frühen Schichten 42 nutzt, um die Coderegionen aufzufinden und damit die weiteren Schichten 44 beziehungsweise die CNNs 60, 62 ersetzt oder ergänzt. Das gilt im Übrigen nicht nur für die Ausführungsform gemäß Figur 7, sondern auch für die anderen.

## Patentansprüche

1. Kamera (10), insbesondere kamerabasierter Codeleser, die einen Bildsensor (24) zum Erfassen von Bilddaten mit einer Vielzahl von Bildpunkten, eine erste Verarbeitungseinheit (30) zum Einlesen der Bilddaten des Bildsensors (24) in einem Bilddatenstrom aus Gruppen benachbarter Bildpunkte, eine zweite Verarbeitungseinheit (32) zum Verarbeiten von Bilddaten und einen Speicher (34) zum Ablegen von Bilddaten und Verarbeitungsergebnissen aus Bilddaten aufweist, wobei ein neuronales Netz (38) auf der ersten Verarbeitungseinheit (30) und/oder der zweiten Verarbeitungseinheit (32) implementiert ist,
**dadurch gekennzeichnet,**
**dass** die erste Verarbeitungseinheit (30) dafür ausgebildet ist, eingelesene Gruppen von Bildpunkten bereits mit mindestens einer ersten Schicht (42) des neuronalen Netzes zu verarbeiten, noch während weitere Gruppen von Bilddaten von dem Bildsensor (24) eingelesen werden.

2. Kamera (10) nach Anspruch 1,
wobei die Gruppe benachbarter Bildpunkte eine Bildzeile oder ein Teil davon ist, somit bereits Bildzeilen mit der ersten Schicht (42, 48) verarbeitet werden, noch während weitere Bildzeilen eingelesen werden.

3. Kamera (10) nach Anspruch 1 oder 2,
wobei die erste Verarbeitungseinheit (30) ein FPGA (Field Programmable Gate Array) und/oder die zweite Verarbeitungseinheit (32) einen Mikroprozessor aufweist.

4. Kamera (10) nach einem der vorhergehenden Ansprüche,
wobei das neuronale Netz (42) für eine Segmentierung der Bilddaten ausgebildet ist, mit der interessierende Bereiche und insbesondere Coderegionen (20) aufgefunden werden.

5. Kamera (10) nach einem der vorhergehenden Ansprüche,
wobei die mindestens erste Schicht (42) des neuronalen Netzes auf der ersten Verarbeitungseinheit (30) eine Merkmalskarte erzeugt, die als Verarbeitungsergebnis in dem Speicher (34) abgelegt wird.

6. Kamera (10) nach Anspruch 5,
wobei die Merkmalskarte eine Wahrscheinlichkeitskarte umfasst, wo sich in den Bilddaten Codes befinden.

7. Kamera (10) nach Anspruch 5 oder 6,
wobei die Merkmalskarte eine geringere Auflösung hat als die Bilddaten des Bildsensors.

8. Kamera (10) nach einem der vorhergehenden Ansprüche,
wobei die erste Verarbeitungseinheit (30) mindestens einen ersten Pufferspeicher (50, 54) zum Zwischenspeichern von Verarbeitungsergebnissen der mindestens ersten Schicht (42) aufweist.

9. Kamera (10) nach einem der vorhergehenden Ansprüche,
wobei mindestens eine auf der ersten Verarbeitungseinheit (30) implementierte Schicht (42) des neuronalen Netzes eine Schrittgröße größer eins aufweist, d.h. deren Faltungskern um jeweils mehr als einen Bildpunkt verschoben wird, und/oder einen gestreckten Faltungskern aufweist, der nicht direkt benachbarte Pixel verarbeitet.

10. Kamera (10) nach einem der vorhergehenden Ansprüche,
wobei die erste Verarbeitungseinheit (30) dafür ausgebildet ist, die eingelesenen Bilddaten in dem Speicher (34) abzulegen, insbesondere nach einer Vorverarbeitung.

11. Kamera (10) nach einem der vorhergehenden Ansprüche,
wobei weitere Schichten (44) des neuronalen Netzes und/oder ein weiteres neuronales Netz auf der zweiten Verarbeitungseinheit (32) implementiert sind beziehungsweise ist, um die Bilddaten und/oder Verarbeitungsergebnisse der ersten Verarbeitungseinheit (30) weiter zu verarbeiten, insbesondere anhand der Verarbeitungsergebnisse der mindestens ersten Schicht (42) Codes (20) zu lesen.

12. Kamera (10) nach einem der vorhergehenden Ansprüche,
wobei die zweite Verarbeitungseinheit (32) einen klassischen Decoder (40) ohne neuronales Netz zum Lesen von Codes (20) aufweist.

13. Kamera (10) nach einem der vorhergehenden Ansprüche,
wobei mindestens zwei neuronale Netze (60, 62) auf der zweiten Verarbeitungseinheit (32) implementiert sind, die jeweils Verarbeitungsergebnisse der ersten Verarbeitungseinheit (30) weiterverarbeiten.

14. Kamera (10) nach einem der vorhergehenden Ansprüche,
die mindestens einen zusätzlichen Verarbeitungsbaustein (56) für Verarbeitungsschritte des neuronalen Netzes (58) aufweist, insbesondere eine NPU (Neural Processing Unit) oder eine GPU (Graphics Processing Unit).

15. Verfahren zum Verarbeiten von Bilddaten mit einer Vielzahl von Bildpunkten,
wobei eine erste Verarbeitungseinheit (30) die Bilddaten von einem Bildsensor (24) in einem Bilddatenstrom aus Gruppen benachbarter Bildpunkte einliest und ein neuronales Netz (38) auf der ersten Verarbeitungseinheit (30) und/oder einer zweiten Verarbeitungseinheit (32) die Bilddaten verarbeitet und wobei Bilddaten und Verarbeitungsergebnissen gespeichert (34) werden,
**dadurch gekennzeichnet,**
**dass** eingelesene Gruppen von Bildpunkten bereits von der ersten Verarbeitungseinheit (30) mit mindestens einer ersten Schicht (42) des neuronalen Netzes verarbeitet werden, noch während weitere Gruppen von Bilddaten von dem Bildsensor (24) eingelesen werden.

## Geänderte Patentansprüche

### Geänderte Patentansprüche gemäss Regel 137(2) EPÜ.

1. Kamera (10), insbesondere kamerabasierter Codeleser, die einen Bildsensor (24) zum Erfassen von Bilddaten mit einer Vielzahl von Bildpunkten, eine erste Verarbeitungseinheit (30) zum Einlesen der Bilddaten des Bildsensors (24) in einem Bilddatenstrom aus Gruppen benachbarter Bildpunkte, eine zweite Verarbeitungseinheit (32) zum Verarbeiten von Bilddaten und einen Speicher (34) zum Ablegen von Bilddaten und Verarbeitungsergebnissen aus Bilddaten aufweist,
**dadurch gekennzeichnet,**
**dass** ein neuronales Netz (38) auf der ersten Verarbeitungseinheit (30) oder der ersten Verarbeitungseinheit (30) und der zweiten Verarbeitungseinheit (32) implementiert ist und dass die erste Verarbeitungseinheit (30) dafür ausgebildet ist, eingelesene Gruppen von Bildpunkten bereits mit mindestens einer ersten Schicht (42) des neuronalen Netzes zu verarbeiten, noch während weitere Gruppen der Bilddaten von dem Bildsensor (24) eingelesen werden.

2. Kamera (10) nach Anspruch 1,
wobei eine jeweilige Gruppe benachbarter Bildpunkte eine Bildzeile oder ein Teil davon ist, so dass bereits Bildzeilen mit der ersten Schicht (42, 48) verarbeitet werden, noch während weitere Bildzeilen eingelesen werden.

3. Kamera (10) nach Anspruch 1 oder 2,
wobei die erste Verarbeitungseinheit (30) ein FPGA (Field Programmable Gate Array) und/oder die zweite Verarbeitungseinheit (32) einen Mikroprozessor aufweist.

4. Kamera (10) nach einem der vorhergehenden Ansprüche,
wobei das neuronale Netz (42) für eine Segmentierung der Bilddaten ausgebildet ist, mit der Regions of Interest und insbesondere Coderegionen (20) aufgefunden werden.

5. Kamera (10) nach einem der vorhergehenden Ansprüche,
wobei die mindestens erste Schicht (42) des neuronalen Netzes auf der ersten Verarbeitungseinheit (30) eine Merkmalskarte erzeugt, die als Verarbeitungsergebnis in dem Speicher (34) abgelegt wird.

6. Kamera (10) nach Anspruch 5,
wobei die Merkmalskarte eine Wahrscheinlichkeitskarte umfasst, die angibt, wo sich in den Bilddaten Codes befinden.

7. Kamera (10) nach Anspruch 5 oder 6,
wobei die Merkmalskarte eine geringere Auflösung hat als die Bilddaten des Bildsensors.

8. Kamera (10) nach einem der vorhergehenden Ansprüche,
wobei die erste Verarbeitungseinheit (30) mindestens einen ersten Pufferspeicher (50, 54) zum Zwischenspeichern von Verarbeitungsergebnissen der mindestens ersten Schicht (42) aufweist.

9. Kamera (10) nach einem der vorhergehenden Ansprüche,
wobei das neuronale Netz ein Convolutional Neural Network ist und mindestens eine auf der ersten Verarbeitungseinheit (30) implementierte Schicht (42) des neuronalen Netzes eine Schrittgröße größer als eins aufweist, d.h. deren Faltungskern um jeweils mehr als einen Bildpunkt verschoben wird, und/oder einen gestreckten Faltungskern aufweist, der nicht direkt benachbarte Bildpunkte verarbeitet.

10. Kamera (10) nach einem der vorhergehenden Ansprüche,
wobei die erste Verarbeitungseinheit (30) dafür ausgebildet ist, die eingelesenen Bilddaten in dem Speicher (34) abzulegen, insbesondere nach einer Vorverarbeitung.

11. Kamera (10) nach einem der vorhergehenden Ansprüche,
wobei weitere Schichten (44) des neuronalen Netzes und/oder ein weiteres neuronales Netz auf der zweiten Verarbeitungseinheit (32) implementiert sind beziehungsweise ist, um die Bilddaten und/oder Verarbeitungsergebnisse der ersten Verarbeitungseinheit (30) weiter zu verarbeiten, insbesondere anhand der Verarbeitungsergebnisse der mindestens ersten Schicht (42) Codes (20) zu lesen.

12. Kamera (10) nach einem der vorhergehenden Ansprüche,
wobei die zweite Verarbeitungseinheit (32) einen Decoder (40) ohne neuronales Netz zum Lesen von Codes (20) aufweist.

13. Kamera (10) nach einem der vorhergehenden Ansprüche,
wobei mindestens zwei neuronale Netze (60, 62) auf der zweiten Verarbeitungseinheit (32) implementiert sind, die jeweils Verarbeitungsergebnisse der ersten Verarbeitungseinheit (30) weiterverarbeiten.

14. Kamera (10) nach einem der vorhergehenden Ansprüche,
die mindestens einen zusätzlichen Verarbeitungsbaustein (56) für Verarbeitungsschritte des neuronalen Netzes (58) aufweist, insbesondere eine NPU (Neural Processing Unit) oder eine GPU (Graphics Processing Unit).

15. Verfahren zum Verarbeiten von Bilddaten mit einer Vielzahl von Bildpunkten,
wobei eine erste Verarbeitungseinheit (30) die Bilddaten von einem Bildsensor (24) in einem Bilddatenstrom aus Gruppen benachbarter Bildpunkte einliest und die Bilddaten verarbeitet, wobei Bilddaten und/oder Verarbeitungsergebnisse gespeichert (34) werden,
**dadurch gekennzeichnet,**
**dass** ein neuronales Netz (38) auf der ersten Verarbeitungseinheit (30) oder der ersten Verarbeitungseinheit (30) und einer zweiten Verarbeitungseinheit (32) die Bilddaten verarbeitet und dass eingelesene Gruppen von Bildpunkten bereits von der ersten Verarbeitungseinheit (30) mit mindestens einer ersten Schicht (42) des neuronalen Netzes verarbeitet werden, noch während weitere Gruppen der Bilddaten von dem Bildsensor (24) eingelesen werden.
